Europäisches Patentamt

European Patent Office

Office européen des brevets

(11) Veröffentlichungsnummer: **0 427 229 A2**

## (12) EUROPÄISCHE PATENTANMELDUNG

(21) Anmeldenummer: 90121302.5

(22) Anmeldetag: 07.11.90

(51) Int. Cl.5: **H01S 3/07**

(30) Priorität: 09.11.89 DE 3937370

(43) Veröffentlichungstag der Anmeldung:
**15.05.91 Patentblatt 91/20**

(84) Benannte Vertragsstaaten:
**DE FR GB IT**

(71) Anmelder: **Bihler, Otto**
**Schleiferweg 2**
**W-8959 Halblech(DE)**

(72) Erfinder: **Bihler, Otto**
**Schleiferweg 2**
**W-8959 Halblech(DE)**

(74) Vertreter: **Liska, H., Dr.-Ing. et al**
**Möhlstrasse 22**
**W-8000 München 80(DE)**

(54) **Laser.**

(57) Es wird ein Laser (2e), insbesondere $CO_2$-Gaslaser, mit einer in mehrere Teilstrecken unterteilten, auf einem gemeinsamen Träger (74e) gehaltenen Anregungsstrecke angegeben. Die Teilstrecken (46) verlaufen ausschließlich radial bezogen auf ein gemeinsamens Zentrum (6e) und sind paarweise über Umlenkspiegel (ioe) und optische Verbindungsstrecken (12e) zwischen den Umlenkspiegeln (10e) an ihren radial äußeren Enden optisch miteinander verbunden. Der Laser (2e) ist sehr kompakt gebaut, hat eine große Ausgangsleistung und funktioniert sehr zuverlässig. Wärmeausdehnungen von Komponenten des Resonatorstrahlengangs Verlaufen im wesentlichen radial zu dem Zentrum (6e) und führen nicht zu Dejustierungen des Resonatorstrahlengangs.

FIG.5

# LASER

Die Erfindung betrifft einen Laser mit einer in mehrere Teilstrecken unterteilten, auf einem gemeinsamen Träger gehaltenen Anregungsstrecke und mehreren die Teilstrecken gegebenenfalls über Umlenkspiegel miteinander verbindenden optischen Verbindungsstrecken.

Die Erfindung bezieht sich insbesondere auf Hochleistungslaser für industrielle Anwendungen, beispielsweise zum Schweißen und Schneiden von Metall. Für die für diese Zwecke erforderliche große Lichtverstärkung im Laserresonator und damit große Laserausgangsleistung benötigt man lange Anregungsstrecken, längs denen das Lasermedium der Anregungsenergie einer Anregungsenergiequelle ausgesetzt ist und der resonatorinterne Laserstrahl mit dem Lasermedium wechselwirken kann.

Lange geradlinige Anregungsstrecken erfordern eine im allgemeinen nicht erwünschte lange Baulänge des Lasers und einen großen Aufwand zu ihrer mechanischen Stabilisierung.

Zur Vermeidung langer geradliniger Anregungsstrecken ist man dazu übergegangen, den Resonatorstrahlengang mittels Umlenkspiegeln zu falten, um die Anregungsstrecke in mehrere Teilstrecken zu unterteilen. Diese Teilstrecken lassen sich auf vergleichsweise kleinem Raum unterbringen.

Bei den bekannten Faltungsmustern, wie der Z-Faltung oder der U-Faltung mit einem Z- bzw. U-förmig gefalteten Resonatorstrahlengang, beispielsweise in einem zylindrischen oder viereckigen Körper, besteht das Problem, daß die entsprechend diesen Faltungsmustern verteilten, beim Betrieb des Lasers als Wärmequellen wirkenden Anregungsstrecken eine komplizierte, anisotrope Temperaturverteilung in dem Laser verursachen, die ihrerseits stark anisotrope Wärmeausdehnungen von Teilstreckenkomponenten bzw. Träger-und Gehäuseteilen bewirkt. Derartige in verschiedenen Richtungen unterschiedlich stark ausgeprägte Wärmeausdehnungen können leicht zur Selbstdejustierung des Resonatorstrahlengangs führen, so daß der Laser nicht mehr zuverlässig funktioniert. Dieses Problem tritt insbesondere bei Hochleistungslasern auf, bei denen sich das Lasermedium beim Laserbetrieb entsprechend stark erwärmt.

Zeil der Erfindung ist es, einen Laser anzugeben, der kompakt aufgebaut ist, eine große Ausgangsleistung hat und zuverlässig funktioniert.

Zur Lösung dieser Aufgabe wird erfindungsgemäß vorgeschlagen, daß die Teilstrecken ausschließlich radial bezogen auf ein gemeinsames Zentrum angeordnet sind. Mit dieser Anordnung der Teilstrecken wird erreicht, daß Wärmeausdehnungen bei Erwärmung des Lasermediums in den Teilstrecken im wesentlichen nur längs der Teilstrecken und allenfalls in vernachlässigbarem Maße quer zu den Teilstrecken auftreten können. Die mit ausschließlich radialen Wärmeausdehnungen verbundene im wesentlichen gleichmäßige Verlängerung aller Teilstrecken beeinträchtigt die Justierung des Resonatorstrahlengangs nicht.

Die radialen Teilstrecken lassen sich auf kleinem Raum unterbringen und bilden in ihrer Summe eine lange effektive Anregungsstrecke, so daß auf der Basis der erfindungsgemäßen Teilstreckenkonfiguration ein kompakter und leistungsstarker Laser aufgebaut werden kann, der zuverlässig funktioniert.

Die Teilstrecken sind vorzugsweise gruppenweise in wenigstens einer gemeinsamen Ebene längs Radiusstrahlen und/oder auf wenigstens einem gemeinsamen Kegelmantel längs Kegelerzeugenden angeordnet, wobei die Teilstrecken der einzelnen Gruppen in gleichen Winkelabständen voneinander angeordnet sind. Auf diese Weise wird eine besonders gute Radialführung etwaiger Wärmeausdehnungen erreicht, so daß Winkeländerungen zwischen den Teilstrecken noch wirksamer unterbunden werden, um Dejustierungen des Resonatorstrahlengangs zu vermeiden.

Gemäß einer besonders bevorzugten Weiterbildung der Erfindung haben die Teilstrecken der einzelnen Gruppen jeweils gleiche Länge und gleichen Abstand zum Zentrum. Mit dieser Teilstreckenkonfiguration wird erreicht, daß die Längenänderungen der Teilstrecken bei den radialen Wärmeausdehnungen für alle Teilstrecken im wesentlichen gleich sind und daß Wärmeausdehnungen quer zu den Teilstrecken noch wirksamer unterbunden werden.

Die radial äußeren Enden der Teilstrecken sind insbesondere über paarweise angeordnete Spiegel und über zwischen den Spiegeln quer zu den Teilstrecken verlaufende optische Verbindungsstrecken optisch miteinander verbunden. Vorzugsweise ist hierbei vorgesehen, daß die Teilstrecken paarweise längs einer Geraden auf gegenüberliegenden Seiten des Zentrums angeordnet sind, so daß der resonatorinterne Strahlengang mehrfach das Zentrum kreuzt. Es wird eine lange Anregungsstrecke unter Verwendung vergleichsweise weniger Spiegel realisiert.

Gemäß einer anderen Ausführungsform der Erfindung sind die radial inneren Enden von Teilstreckenpaaren über wenigstens einen Umlenkspiegel optisch miteinander verbunden. Damit wird erreicht, daß das Zentrum aus dem Resonatorstrahlengang ausgenommen ist. Sofern man eine geringe Abweichung der Teilstrecken von ihrem radialen Verlauf tolerieren kann, kommt man pro Teilstreckenpaar mit einem Umlenkspiegel aus, der nahe dem Zentrum angeordnet ist. Eine Aufrechterhaltung der Zentralsymmetrie der Teilstrecken ist gewährleistet, wenn die Teilstreckenpaare über zwei Umlenkspiegel optisch miteinander verbunden sind.

Gemäß einer bevorzugten Ausgestaltung der Erfindung ist der Laser als Gaslaser, insbesondere $CO_2$-Laser ausgebildet und umfaßt Elektroden, die den einzelnen Teilstrecken zugeordnet sind. Die Elektroden dienen zur elektrischen Anregung des gasförmigen Lasermediums.

Vorzugsweise ist im Bereich des Zentrums eine den Teilstrecken gemeinsam zugeordnete Zentralelektrode, insbesondere Kathode, angeordnet. Durch die Verwendung nur einer Zentralelektrode wird der Aufbau des Lasers vereinfacht. Ferner ist es mit einfachen Mitteln möglich, die Zentralelektrode zu kühlen. Die Gegenelektroden sind an den radial äußeren Enden der Teilstrecken vorgesehen, so daß die Teilstrecken nahezu auf ihrer gesamten Länge als Gasanregungsstrecken bzw. Gasentladungsstrecken ausgenutzt werden.

Die Zentralelektrode ist insbesondere als betriebsmäßig auswechselbares Bauteil ausgebildet, was den Laser besonders wartungsfreundlich macht. Dies ist insbesondere wichtig, wenn die Zentralelektrode als Kathode ausgebildet ist und somit aufgrund von Sputter-Effekten unter Umständen erhöhtem Verschleiß ausgesetzt sein kann.

Die Teilstrecken verlaufen zweckmäßigerweise in Rohren, in denen das gasförmige Lasermedium längs der Rohrachsen strömen kann und die im Bereich des Zentrums in eine gemeinsame Kammer einmünden und an ihren radial äußeren Enden an einer mit der Kammer verbundenen Gasumwälzeinrichtung angeschlossen sind. Auf diese Weise ist ein geschlossener Gaskreislauf hergestellt, in dem das Gas ständig umgewälzt und in der Gasumwälzeinrichtung gekühlt wird. Die Komponenten der Anregungsstrecke können somit auf vergleichsweise niedriger Temperatur gehalten werden, so daß Wärmeausdehnung und damit verbundene Verschiebungen der Strahlengangkomponenten klein bleiben. Die Gaskühlung hat insbesondere Bedeutung für einen $CO_2$-Laser, da sich das $CO_2$-Lasermedium bei höheren Temperaturen zersetzt oder untere Laserniveaus des $CO_2$ bei höheren Temperaturen thermisch besetzt werden, mit der Folge einer Herabsetzung der Lasereffizienz.

Von Vorteil ist auch die Gasführung längs der Rohrachsen insbesondere von der jeweiligen äußeren Elektrode zu der Zentralelektrode. Eine derartige Geometrie ermöglicht beispielsweise bei einem $CO_2$-Laser einen im wesentlichen ungestörten $TEM_{00}$-Strahlungsmode, der durch eine gleichmäßige, glockenförmige Intensitätsverteilung über den Strahlquerschnitt gekennzeichnet ist. Dieser $TEM_{00}$-Mode ermöglicht einen extrem kleinen Brennfleck des Laserstrahls mit entsprechend großer Energiedichte, was für die Materialbearbeitung von großer Bedeutung ist.

Die vorstehend genannte Konstruktion ermöglicht ferner einen sehr effizienten Gasaustausch, wobei die Strömungsgeschwindigkeit des Gases in allen Rohren im wesentlichen gleich ist.

Gemäß einer Weiterbildung der Erfindung weist die Gasumwälzeinrichtung eine das Gas durch die Gasrohre und die Gasumwälzeinrichtung fördernde Turbine auf, die insbesondere derart angeordnet ist, daß ihre Drehachse senkrecht durch das Zentrum der Anordnungsebene der Teilstrecken bzw. gleichachsig zum Anordnungskegel der Teilstrecken verläuft. Die Turbine kann zum einen große Gasmengen fördern, ohne dabei Stoßwellen zu erzeugen, die beispielsweise bei herkömmlichen Pumpen unvermeidlich wären. Die Strömungsrichtung ist vorzugsweise so gewählt, daß das Gas die Teilstrecken durch die zentrale Kammer verläßt und an den radial äußeren Enden der Teilstrecken wieder in die Teilstrecken eintritt. Die zentrale Anordnung der Turbine dient unter anderem dazu, daß das an den radial äußeren Enden der Teilstrecken wieder in die Teilstrecken einströmende Gas an allen Teilstreckenenden im wesentlichen gleiche Temperatur hat, wobei darauf geachtet ist, daß die von den radial äußeren Enden der Teilstrecken zur Turbine führenden Leitungen im wesentlichen gleich lang sind und möglichst symmetrisch zu der jeweiligen Achse angeordnet sind.

Eine besonders effiziente Gaskühlung wird durch Wärmetauschmittel in Gasströmungsrichtung vor und hinter der Turbine erzielt.

In einer bevorzugten Weiterbildung der Erfindung hat die Kammer einen abnehmbaren Deckel, der die Zentralelektrode bildet. Die Zentralelektrode kann bei Bedarf einfach und schnell ausgetauscht werden.

Eine Ausführungsform der Erfindung ist dadurch gekennzeichnet, daß die Teilstrecken in einer gemeinsamen Ebene verlaufen und daß der Träger als zu einer senkrecht zu der Ebene durch das Zentrum verlaufenden Achse im wesentlichen rotationssymmetrisches Gehäuse ausgebildet ist, welches aus einer die Komponenten der Anregungsstrecke tragenden Schale und einem mit einer Umfangshinterschneidung an dem Schalenrand anschließenden Gehäusedeckel besteht. Durch die Symmetrie des Trägers in Verbindung mit der Symmetrie der Teilstrecken werden Wärmedehnungen in dem Gesamtsystem quer zu den Teilstrecken nahezu vollständig unterbunden. Der Gehäusedeckel stabilisiert die Schale und hilft, Dehnungen längs der Teilstrecken zu begrenzen.

Zur noch weitergehenden Gehäusestabilisierung und Vermeidung von Wärmeausdehnungen sind Schale und Deckel vorzugsweise aus kohlenstoffverstärktem Kunststoff gebildet und mit integral angeformten, insbesondere radial verlaufenden Rippen versehen. Der kohlenstoffverstärkte Kunststoff hat einen sehr kleinen Wärmeausdehnungskoeffizienten.

Die Schale ist über gummielastische Elemente an einem Tragtisch gehalten. Die gummielastischen Elemente fangen äußere Vibrationen auf, gleichen Verspannungen aus und wirken temperaturisolierend, so daß die Temperaturverteilungssymmetrie des Lasers nicht von außen gestört wird.

Die Schale und/oder der Deckel können zur Bildung von Kühlmittelkanälen insbesondere doppelwandig ausgebildet sein.

Zum Ausgleich der Temperatur der Luft im Gehäuseinnenraum kann insbesondere ein Ventilator an dem Deckel innerhalb des Gehäuses angeordnet sein, der die Luft in dem Gehäuse umwälzt. Ferner kann eine zusätzliche Wasserkühlung mit beispielsweise an dem Deckel innerhalb des Gehäuses gehaltenen Kühlschlangen oder Kühlrohren vorgesehen sein.

Für eine besonders genaue Strahlengangzentrierung und Justierung wird vorgeschlagen, daß jeder Umlenkspiegel ein an dem Träger zu befestigendes Basisteil und einen mit einer Spiegelfläche versehenen, relativ zum Basisteil beweglichen Spiegelträger aufweist, der mittels einer Federanordnung gegen das Basisteil vorgespannt und über drei in einem Dreieck angeordnete, längsverstellbare Stützorgane an dem Baisisteil abgestützt ist, wobei die Stützorgane an dem Basisteil oder dem Spiegelträger gehalten sind und mit ihren freien Enden in Keilnuten des anderen Teils eingreifen, wobei zwei Nuten parallel zueinander verlaufen und die dritte quer zu den parallelen Nuten verläuft.

Dieser Umlenkspiegel ist auch für andere Laser und sonstige optische Systeme verwendbar und hat insofern selbständige Bedeutung.

Die Stützorgane sind vorzugsweise als in den Spiegelträger geschraubte Stellschrauben ausgebildet.

Zwei der Nuten sind insbesondere längs einer Geraden hintereinander angeordnet, wohingegen die dritte Nut senkrecht zu den anderen beiden Nuten verläuft.

Vorzugsweise ist die Federanordnung aus Zugfedern gebildet, die einerseits mit dem Basisteil und andererseits mit dem Spiegelträger verbunden und insbesondere in der Nähe der Stützorgane angeordnet sind. Der Spiegelträger kann somit vielfältig und genau justiert werden, wobei er durch die Zugfedern ständig gegen das Basisteil vorgespannt und gehalten bleibt.

In folgenden wird die Erfindung anhand der Zeichnungen näher erläutert. Es zeigt:

Fig. 1 eine schematische Darstellung einer ersten Konfiguration von Teilstrecken und optischen Verbindungsstrekken einer Resonatoranordnung nach der Erfindung in der Draufsicht,

Fig. 2 eine schematische Perspektivdarstellung einer zweiten Konfiguration von Teilstrecken und optischen Verbindungsstrecken einer Resonatoranordnung nach der Erfindung,

Fig. 3 eine schematische Darstellung einer dritten Konfiguration von Teilstrecken und optischen Verbindungsstrecken einer Resonatoranordnung nach der Erfindung in der Draufsicht,

Fig. 4 eine schematische Perspektivdarstellung einer vierten Konfiguration von Teilstrecken und optischen Verbindungsstrecken einer Resonatoranordnung nach der Erfindung,

Fig. 5 einen $CO_2$-Gaslaser nach der Erfindung in der Draufsicht mit abgenommenem Gehäusedeckel,

Fig. 6 eine Schnittseitenansicht des in Fig. 5 gezeigten Lasers mit der durch VI-VI in Fig. 5 gekennzeichneten Schnittebene,

Fig. 7 eine Schnittdarstellung eines Spiegelkastens nach der Erfindung in der Draufsicht mit der in Fig. 8 mit VII-VII gekennzeichneten Schnittfläche und mit Ausbrüchen zur teilweisen Sichtbarmachung einer durch zwei Keilnuten verlaufenden, unter der Schnittebene VII-VII verlaufende Ebene, und

Fig. 8 eine Rückansicht des in Fig. 7 gezeigten Spiegelkastens.

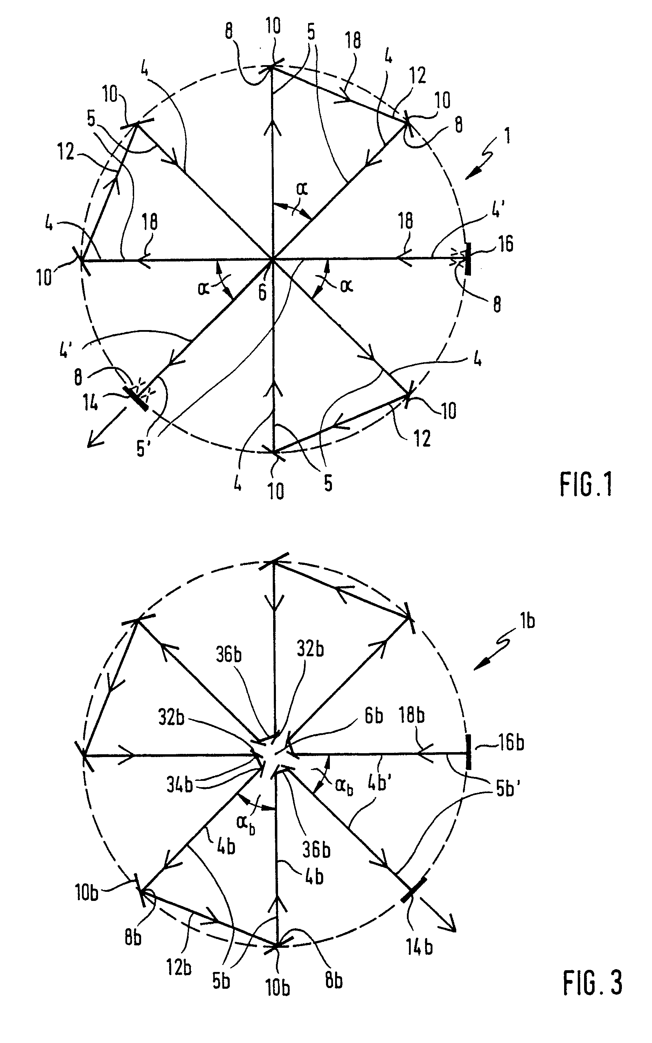

In Fig. 1 ist ein erstes Beispiel einer Laserresonatoranordnung 1 schematisch dargestellt. Die Resonatoranordnung 1 weist eine Gruppe von in einer Ebene verlaufenden Teilstrekken 4, 4′ auf, die ausschließlich radial in bezug auf ein Zentrum 6 angeordnet sind und gleiche Längen und Winkelabstände $\alpha$ voneinander haben. Die radial äußeren Enden 8 von drei Teilstreckenpaaren 5 sind über paarweise angeordnete Umlenkspiegel 10 und zwischen den Umlenkspiegeln 10 quer zu den Teilstreken 4 der Teilstreckenpaare 5 verlaufenden optischen Verbindungsstrecken 12 optisch miteinander verbunden. Die Teilstrecken 4′ eines weiteren Teilstreckenpaares 5′ grenzen mit ihren radial äußeren Enden 8 an jeweilige Spiegelflächen 14, 16 an, die die Endspiegel 14, 16 des Resonators 1 bilden.

Der Strahlenverlauf in dem Resonator 1 für den an dem Endspiegel 16 vollständig reflektierten Strahl ist durch Pfeile 18 angedeutet. Ausgehend von dem Resonatorendspiegel 16 durchläuft der Strahl unter Kreuzung des Zentrums 6 zwei geradlinig hintereinander angeordnete Teilstrecken 4, wird dann von einem Umlenkspiegel 10 längs einer optischen Verbindungsstrecke 12 abgelenkt, um dann nach einer weiteren Reflexion an einem Umlenkspiegel 10 um einen Winkelabstand $\alpha$ im Uhr-

zeigersinn versetzt entlang zweier weiterer geradlinig aufeinanderfolgender Teilstrecken unter erneuter Kreuzung des Zentrums 6 fortzuschreiten. Dieses Faltungsschema setzt sich fort, bis der Strahl den teilweise strahlungsdurch lässigen Resonatorendspiegel 14 erreicht.

Anregung eines Lasermediums findet nur im Bereich der Teilstrecken 4, 4' und nicht im Bereich der optischen Verbindungsstrecken 12 statt. Damit wird erreicht, daß die mit der Erwärmung bei der Laseranregung einhergehenden Wärmeausdehnungen von Resonator und Gehäusekomponenten im wesentlichen radial verlaufen, so daß sich die Winkelabstände $\alpha$ allenfalls in einem so geringen Maße verändern, daß keine merkliche Dejustierung des Resonatorstrahlengangs auftritt.

Nachstehend werden weitere Beispiele nach der Erfindung beschrieben. Teile bzw. Strecken dieser weiteren Beispiele, die bezüglich ihrer Funktion eine Entsprechung in der vorstehend erläuterten Resonatoranordnung haben, sind mit einem entsprechend gleichen Bezugszeichen und mit einem nachgestellten Buchstaben gekennzeichnet. Die Beschreibung dieser weiteren Beispiele bezieht sich im wesentlichen auf Abweichungen gegenüber dem vorstehend erläuterten Beispiel.

Die gleich langen Teilstrecken 4a, 4a' sind auf dem Mantel 20a eines rotationssymmetrischen Doppelkegels 22a längs Kegelerzeugenden 24a angeordnet. Die Kegelspitzen 26a der den Doppelkegel 22a bildenden gleichgroßen Einzelkegel 28a berühren einander in einem Zentrum 6a. Die in bezug auf das Zentrum 6a radial äußeren Enden 8a von Teilstreckenpaaren 5a sind über paarweise am Basisumfang der Einzelkegel 28a angeordnete Spiegel 10a und zwischen den Spiegeln 10a quer zu den Teilstrecken 4a verlaufenden optischen Verbindungsstrekken 12a optisch miteinander verbunden. Die Teilstrecken 4a, 4a' haben an beiden Einzelkegeln 28a gleiche Winkelabstände $\alpha_a$ voneinander.

Eine Teilstrecke 4a' eines weiteren Teilstreckenpaares 5a' grenzt mit ihrem radial äußeren Ende 8a an einem vollständig strahlungsreflektierenden Resonatorendspiegel 16a an, und die andere Teilstrecke des Teilstreckenpaares 5a' grenzt mit ihrem radial äußeren Ende 8a an einen teildurchlässigen Resonatorendspiegel 14a zur Strahlungsauskopplung an. Der resonatorinterne Strahlenverlauf des an dem Resonatorendspiegel 16a reflektierten Strahls ist durch Pfeile 18a angedeutet. Ähnlich wie bei der vorher beschriebenen Resonatoranordnung kreuzt der Strahl bei seinem Weg von dem Endspiegel 16a zu dem teildurchlässigen Auskoppelspiegel 14a mehrfach das Zentrum 6a und durchläuft zwischendurch die gleich langen optischen Verbindungsstrecken 12a.

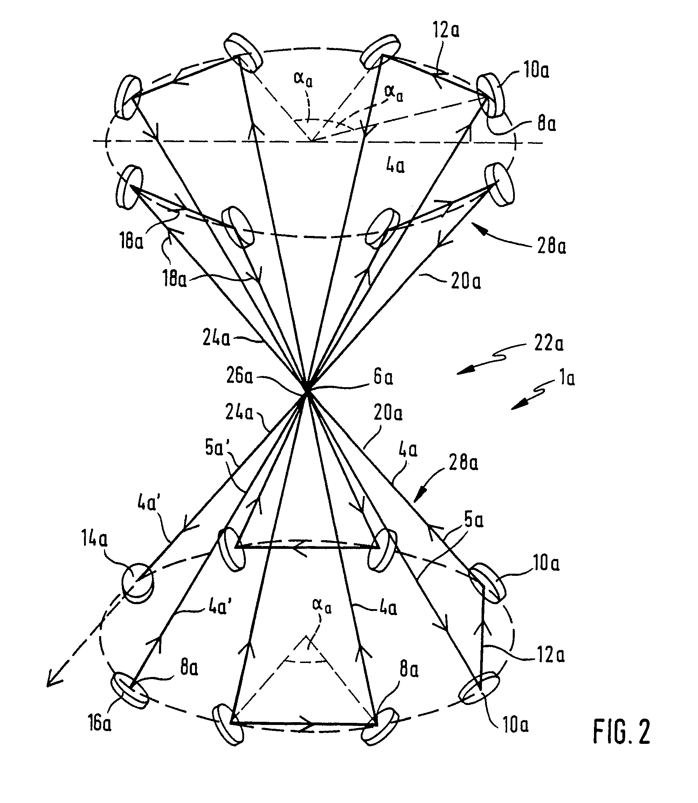

In der in Fig. 2 gezeigten Resonatoranordnung kann eine insgesamt besonders lange Anregungsstrecke mit ausschließlich radialen Teilstrecken 4a, 4a' in einem vergleichsweise kleinen Raumbereich untergebracht werden.

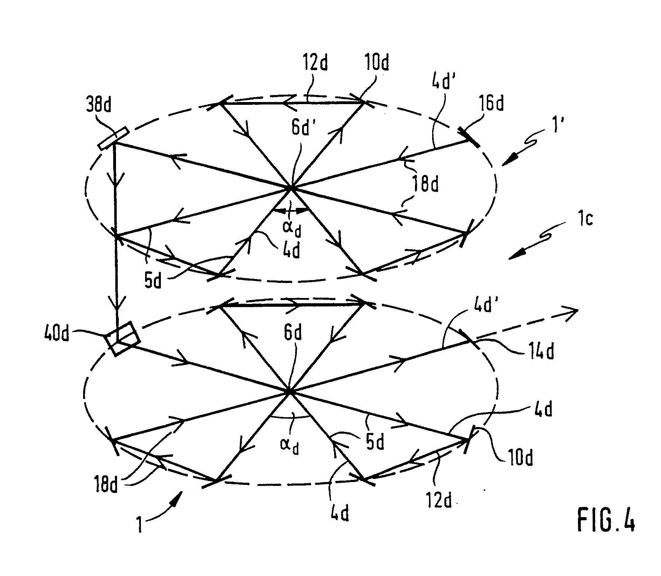

Nachstehend wird die in Fig. 3 gezeigte Resonatoranordnung erläutert. Bei diesem dritten Beispiel liegen die Teilstrekken 4b, 4b' in einer Ebene und verlaufen radial zu einem Zentrum 6b. Die Teilstrecken 4b haben gleiche Länge, gleichen Winkelabstand $\alpha_b$ und gleichen Abstand zum Zentrum 6b. Zusätzlich zu den Spiegeln 10b an den radial äußeren Enden 8b der Teilstrecken 4b sind Spiegel 32b an den radial inneren Enden 34b der Teilstrecken 4b vorgesehen, die den Strahl in Nähe des Zentrums 6b längs inneren Verbindungsstrekken 36b von einem Teilstreckenpaar 5b zum nächsten Teilstreckenpaar führen.

Der Verlauf des an dem vollständig reflektierten Resonatorendspiegels reflektierten, resonatorinternen Laserstrahls ist an den Pfeilen 18b zu erkennen. Eine Resonatoranordnung gemäß Fig. 3 kann beispielsweise zweckmäßig sein, wenn das Zentrum 6b freigehalten werden muß, beispielsweise für Halteorgane.

Sofern man leichte Abweichungen vom radialen Verlauf der Teilstrahlen 4b, 4b' toleriert, können die paarweise zusammenwirkenden Spiegel 32b durch jeweils einen Spiegel ersetzt sein. In diesem Fall entfallen die inneren Verbindungsstrecken 36b.

Fig. 4 zeigt eine Resonatoranordnung 1c aus zwei koaxial übereinander angeordneten Resonatorkonfigurationen 1, 1' des in Fig. 1 gezeigten Typs, deren Teilstrecken 4d von oben gesehen in Deckung miteinander gebracht sind. Anstelle eines teildurchlässigen Endspiegels hat die obere Resonatorkonfiguration 1' einen die Laserstrahlung senkrecht zur unteren Resonatorkonfiguration 1 reflektierenden Ablenkspiegel 38d. Die untere Resonatorkonfiguration 1 hat anstelle des vollständig reflektierenden Endspiegels einen die vom Ablenkspiegel 38d reflektierte Strahlung in die untere Resonatorkonfiguration 1 einkoppelnden Ablenkspiegel 40d.

Das in Fig. 4 gezeigte Beispiel hat ebenfalls eine lange Anregungsstrecke und läßt sich kompakt aufbauen. Selbstverständlich können auch mehrere und andere Resonatorkonfigurationen in der in Fig. 4 gezeigten Weise miteinander gekoppelt sein.

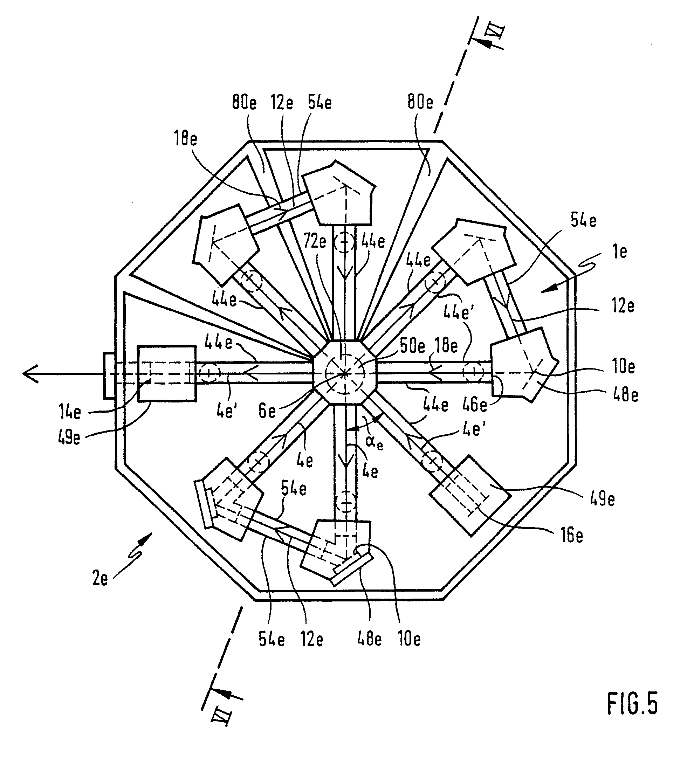

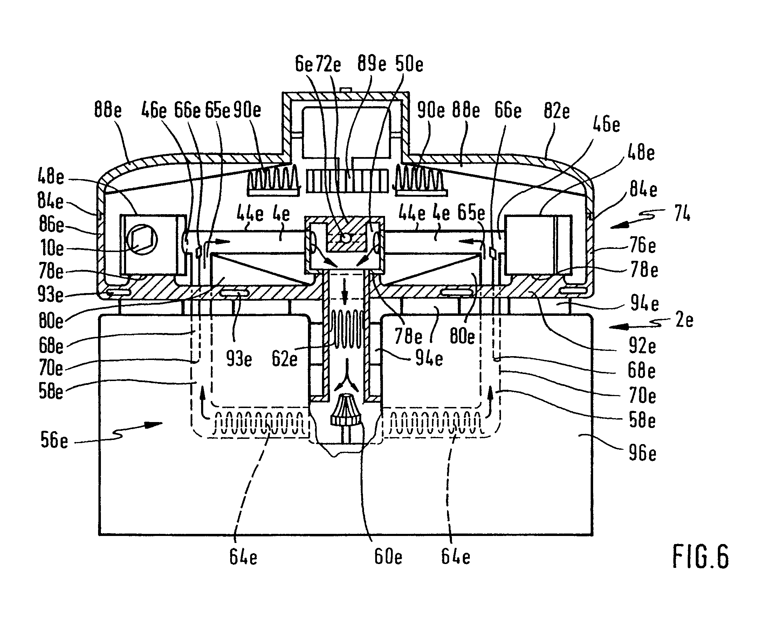

In Fig. 5 und Fig. 6 ist ein bevorzugtes Ausführungsbeispiel der Erfindung gezeigt. Dabei handelt es sich um einen $CO_2$-Gaslaser 2e mit einer Resonatoranordnung 1e, die der unter Bezugnahme auf Fig. 1 bereits erläuterten Resonatoranordnung 1 entspricht.

Die Teilstrecken 4e, 4e' verlaufen in ersten Gasrohren 44e, die mit ihren radial äußeren Enden 46e in nach außen abgedichtete, die Spiegel 10e bzw. 14e, 16e enthaltende Spiegelkammern 48e bzw. 49e und mit ihren radial inneren Enden in eine gemeinsame Absaugkammer 50e einmünden. Zweite Gasrohre 54e umhüllen die optischen Verbindungsstrecken 12e und verbinden über Spiegelkästen 48e Paare 44e' von ersten Rohren 44e miteinander. Die Rohre 44e, 54e können beispielsweise aus wärmebeständigem Glas sein.

Die Absaugkammer 50e ist rotationssymmetrisch. Ihre Achse verläuft senkrecht zur Ebene der Teilstrecken 4e, 4e' durch das Zentrum 6e. Die Absaugkammer ist an einer Gasumwälzeinrichtung 56e angeschlossen, welche das Gas durch die Absaugkammer 50e hindurch aus den Rohren 44e heraussaugt und über Silikon-Zuführungsleitungen 58e, die nahe den radial äußeren Enden 46e der Rohre 44e angeschlossen sind, wieder in die Rohre 44e hineinfördert. Die Umwälzeinrichtung 56e ist im wesentlichen symmetrisch zu einer durch das Zentrum 6e der Anordnungsebene der Teilstrecken 4e verlaufenden Achse aufgebaut und umfaßt eine Turbine 60e, die einen schnellen und gleichmäßigen Gasstrom durch die ersten Rohre 44e, die Kammer 50e und die Umwälzeinrichtung 56e fördert. Die Umwälzeinrichtung 56e umfaßt ferner die Gasleitungen 58e zur Zurückführung des Gases zu den ersten Rohren 44e, eine an der Absaugkammer 50e sich anschließende Turbinenkammer 61e und Wärmetauscher 62e, 64e zur Gaskühlung, die in Gasströmungsrichtung vor und hinter der Turbine 60e angeordnet sind. Durch den symmetrischen Aufbau der Umwälzeinrichtung 56e wird dafür Sorge getragen, daß das den ersten Gasrohren 44e zugeführte Gas an allen radial äußeren Enden 46e der ersten Gasrohre 44e mit möglichst gleicher Temperatur und Strömungsgeschwindigkeit ankommt.

An den Anschlußstellen 65e der Gaszuleitungen 58e an den ersten Gasrohren 44e sind Anoden 66e in den Gasrohren 44e angeordnet, deren elektrische Anschlüsse 68e durch gasdichte Durchführungen 70e der Zuleitungen 58e nach außen geführt sind. Den Anoden 66e ist eine gemeinsame, im Bereich des Zentrums 6e angeordnete Kathode 72e zugeordnet, die von einem die Absaugkammer 50e gasdicht abschließenden Kammerdeckel 72e gebildet ist.

Die Kathode 72e ist betriebsmäßig auswechselbar, was der Wartungsfreundlichkeit des Lasers nach der Erfindung zugute kommt.

Anoden 66e und Kathode 72e schließen zwischen sich Gasentladungsstrecken bzw. Gasanregungsstrecken zur Laseranregegung ein, die von dem laseraktiven Gas axial durchströmt werden. Mit einer solchen Lasergeometrie erhält man einen im wesentlichen ungestörten $TEM_{00}$-Lasermode mit einer extrem hohen Energiedichte im Zentrum des Laserstrahlquerschnitts.

Der Laser hat ein im wesentlichen rotationssymmetrisches Gehäuse 74e, dessen Achse senkrecht zu der Anordnungsebene der Teilstrecken 4e durch das Zentrum 6e verläuft. Das Gehäuse 74e umfaßt eine untere Schale 76e, die in ihrem Inneren die Spiegelkammern 48e, 49e und den Absaugtopf 50e auf in einer gemeinsamen Ebene liegenden Stützflächen 78e abstützt.

Die Schale 76e weist integral angeformte radiale Aussteifungsrippen 80e auf, die in gleichen Winkelabständen voneinander angeordnet sind. In Fig. 5 sind drei der insgesamt acht Aussteifungsrippen 80e gezeigt.

Das Gehäuse 74e umfaßt ferner einen Gehäusedeckel 82e, der mit einer Umfangshinterschneidung 84e an dem Rand der Schale 76e anschließt. Auf diese Weise wirkt der Deckel 82e radialen Dehnungen der Schale 76e entgegen. Der Deckel weist radiale Versteifungsrippen 88e auf, die in gleichen Winkelabständen voneinander angeordnet sind. An dem Deckel 82e ist ein Ventilator 89e zentrisch innerhalb des Gehäuses 74e angeordnet, welcher die Luft im Gehäuseinneren ventiliert. Nahe dem Ventilator sind Kühlschlangen 90e zur Luftkühlung in dem Gehäuseinneren angeordnet.

Als weitere Kühlmaßnahme ist vorgesehen, daß der Boden 92e der Schale 76e im wesentlichen konzentrisch zu der senkrecht zur Ebene der Teilstrecken 4e durch das Zentrum 6e verlaufenden Achse angeordnete Kühlmittelkanäle 93e aufweist.

Das Gehäuse 74e ist aus einem kohlenstoffaserverstärkten Kunststoff hergestellt. Dieses Material hat einen sehr kleinen Wärmeausdehnungskoeffizienten.

Zur Vermeidung von Stößen oder Vibrationsübertragungen auf das Gehäuse 74e ist die Schale 76e über gummielastische Elemente 94e an einem Tragtisch 96e gehalten.

Der vorstehend erläuterte $CO_2$-Gaslaser ist insgesamt im wesentlichen symmetrisch bezüglich einer senkrecht zur Anordnungsebene der Teilstrecken 4e durch das Zentrum verlaufende Achse aufgebaut, wobei das als Wärmequelle wirkende $CO_2$-Lasermedium und alle Wärmesenken im wesentlichen symmetrisch zu dieser Achse verteilt sind. Insbesondere findet in den quer zu den Teilstrecken 4e, 4e' verlaufenden optischen Übertragungsstrecken 12e keine Gaserwärmung statt, da diese Strecken nicht im Wirkungsbereich der gasanregenden Elektroden liegen. Es bildet sich eine in bezug auf die oben genannte zentrische Achse symmetrische Temperaturverteilung in dem Laser aus, wodurch Wärmeausdehnungen in dem Laser quer zu den Teilstrecken im wesentlichen unterdrückt und auf diese Weise Dejustierungen des Resonatorstrahlenganges vermieden werden. Die mechanische Gehäusekonstruktion und das Gehäusematerial sind ferner so ausgelegt, daß Wärmeausdehnungen insgesamt, also auch radiale Wärmeausdehnungen, weitgehend unterbunden werden. Die Umwälzeinrichtung 56e und die weiteren Kühlmaßnahmen verhindern große Temperaturdifferenzen in dem Laser. Der Laser hat bei kompakten Außenabmessungen eine große Ausgangsleistung, da eine insgesamt lange Anregungsstrecke vorliegt, ist sehr kompakt, da die Anregungsstrecke in mehrere Teilstrecken auf kleinem Raum verteilt ist, und arbeitet sehr zuverlässig, da das gasförmige Lasermedium ständig effizient gekühlt wird und ferner Selbstdejustierung durch die bereits im Zusammenhang mit der Wärmeausdehnungsproblematik genannten Maßnahmen unterbunden ist.

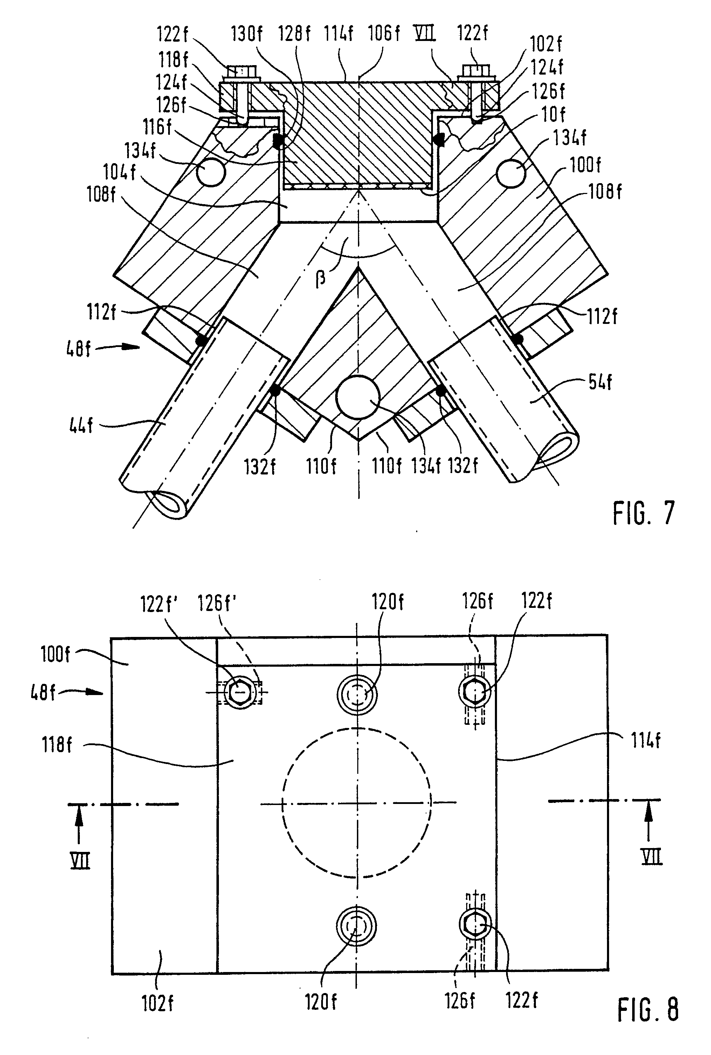

Nachstehend wird unter Bezugnahme auf die Fig. 7 und 8 eine der Spiegelkammern 48f des Lasers nach der Erfindung näher erläutert.

Fig. 7 zeigt die Spiegelkammer 48f in einer Schnittdarstellung. Die Spiegelkammer 48f umfaßt ein Basisteil 100f mit einer Rückwand 102f und einem in die Rückwand 102f eingeformten zylindrischen Spiegelschacht 104f, dessen Achse 106f senkrecht zur Rückwand 102f verläuft, und der an zwei Rohranschlußkanäle 108f angeschlossen ist, die symmetrisch zu einer längs der Achse 106f des Spiegelschachtes 104f verlaufenden Vertikalebene unter einem Winkel β von dem Spiegelschacht 104f ausgehen und sich im wesentlichen horizontal in Richtung weg von der Rückwand 102f durch das Basisteil 100f hindurch erstrecken und an der Frontseite 110f des Basisteils 100f Anschlüsse 112f für Gasrohre 44f, 54f bilden.

An der Rückseite 102f des Basisteils 100f ist ein Spiegelträger 114f angeordnet, der einen in den Spiegelschacht 104f eingeführten zylindrischen Abschnitt 116f mit einer den Umlenkspiegel 10f bildenden verspiegelten Frontseite 10f und einen die Rückseite 102f des Basisteils 100f überdeckenden verbreiterten Halterungsabschnitt 118f umfaßt. Der Spiegelträger 114f ist mittels Federn 120f zu dem Basisteil 100f hin vorgespannt und stützt sich über drei, in einem Dreieck angeordnete, durch den vorbereiterten Halterungsabschnitt 118f hindurchgeschraubte Stellschrauben 122f an der Rückseite 102f des Basisteils 100f ab.

Die Dreiecksanordnung der Stellschrauben 122f ist in Fig. 8 zu erkennen. Die Stellschrauben 122f weisen an ihren sich an dem Basisteil 100f abstützenden Enden Kugelkalotten 124f auf, die in Keilnuten 126f, 126f' des Basisteils 100f eingreifen. Zwei der Keilnuten 126f an der Rückseite 102f des Basisteils 100f verlaufen in gerader Richtung hintereinander, und die dritte Keilnut 126f' verläuft senkrecht zu den anderen beiden. Zur Justierung des Umlenkspiegels 10f können die Stellschrauben 122f verstellt werden, wodurch der Umlenkspiegel 10f axial in dem Spiegelschacht 104f verschoben und ferner relativ zur Achse des Spiegelschachtes 104f um zwei senkrecht zueinander verlaufende Kippachsen verkippt werden kann. Bei jeder Verkippung des Spiegelträgers 114f um die Kippachsen können die Stellschrauben 122f mit ihren Kugelkalotten 124f in den Keilnuten 126f, 126f' Ausgleichsbewegungen ausführen, so daß bei dem Verkippen keine Spannungen zwischen Spiegelträger 114f und Basisteil 100f auftreten. Eine Rotation des Spiegelträgers 114f um die Achse 106f des Spiegelschachtes 104f findet bei den Justierbewegungen nicht statt. Das Justieren des Spiegels 10f ist auf diese Weise sehr einfach und präzise möglich.

Der zylindrische Abschnitt 116f des Spiegelträgers 114f hat einen geringfügig kleineren Durchmesser als der Spiegelschacht 104f, so daß für Kippbewegungen des Spiegelträgers 114f hinreichend viel Spiel zwischen dem Mantel des zylindrischen Abschnitts 116f und dem Umfang des Spiegelschachtes 104f vorliegt.

Ein um den zylindrischen Abschnitt 116f herum in einer Ringnut 128f des Basisteils 100f angeordneter O-Ring 130f dichtet den Spiegelschacht 104f nach außen gasdicht ab. Weitere O-Ringe 132f bilden Dichtungen zwischen den Rohranschlußkanälen 108f und den daran angeschlossenen Gasrohren 44f, 54f.

Die in Fig. 7 gezeigten Schraublöcher 134f dienen zur Durchführung von Schrauben für die Befestigung des Basisteils 100f an einer Haltefläche des Lasergehäuses.

## Ansprüche

1. Laser mit einer in mehrere Teilstrecken (4) unterteilte, auf einem gemeinsamen Träger gehaltene Anregungsstrecke und mehreren die Teilstrecken (4) gegebenenfalls über Umlenkspiegel (10) miteinander verbundenen optischen Verbindungsstrecken (12) **dadurch gekennzeichnet,** daß die Teilstrecken (4) ausschließlich radial bezogen auf ein gemeinsames Zentrum (6) angeordnet sind.

2. Laser nach Anspruch 1, dadurch gekennzeichnet, daß die Teilstrecken (4) gruppenweise in wenigstens einer gemeinsamen Ebene längs Radiusstrahlen und/oder auf wenigstens einem gemeinsamen Kegelmantel (20a) längs Kegelerzeugenden (24a) angeordnet sind, und daß die Teilstrecken (4) der einzelnen Gruppen in gleichen Winkelabständen voneinander angeordnet sind.

3. Laser nach Anspruch 1 oder 2, dadurch gekennzeichnet, daß die Teilstrecken (4) der einzelnen Gruppen jeweils gleiche Länge und gleichen radialen Abstand zum Zentrum (6) haben.

4. Laser nach Anspruch 1, 2 oder 3, dadurch gekennzeichnet, daß die radial äußeren Enden der Teilstrecken (4) über paarweise angeordnete Spiegel (10) und über zwischen den Spiegeln (10) quer zu den Teilstrecken (4) verlaufende optische Verbindungsstrecken (12) optisch miteinander verbunden sind.

5. Laser nach wenigstens einem der vorhergehenden Ansprüche, dadurch gekennzeichnet, daß die radial inneren Enden von Teilstreckenpaaren (4b) über wenigstens einen Umlenkspiegel (32b) optisch miteinander verbunden sind.

6. Laser nach wenigstens einem der vorhergehenden Ansprüche, dadurch gekennzeichnet, daß er als Gaslaser ausgebildet ist und den einzelnen Teilstrecken (4e) zugeordnete Elektroden (66e, 72e) umfaßt.

7. Laser nach Anspruch 6, dadurch gekennzeichnet, daß im Bereich des Zentrums (6e) eine den Teilstrecken (4e) gemeinsam zugeordnete Zentralelektrode (72e), insbesondere Kathode, angeordnet ist.

8. Laser nach Anspruch 7, dadurch gekennzeichnet, daß die Zentralelektrode (72e) als betriebsmäßig auswechselbares Bauteil ausgebildet ist.

9. Laser nach wenigstens einem der Ansprüche 6 bis 8, dadurch gekennzeiohnet, daß die Teilstrek-ken (4e) in Gasrohren (44e) verlaufen, die im Bereich des Zentrums (6e) in eine gemeinsame Kammer (50e) einmünden und im Bereich ihrer radial äußeren Enden an eine mit der Kammer (50e) verbundene Gasumwälzeinrichtung (56e) angeschlossen sind.

10. Laser nach Anspruch 9, dadurch gekennzeichnet, daß die Gasumwälzeinrichtung (56e) eine das Gas durch die Gasrohre (44e) und die Gasumwälzeinrichtung fördernde Turbine (60e) aufweist.

11. Laser nach Anspruch 10, dadurch gekennzeichnet, daß die Drehachse der Turbine (60e) senkrecht durch das Zentrum (6e) der Anordnungsebene der Teilstrecken (4e) bzw. gleichachsig zum Anordnungskegel (28a) der Teilstrecken (4a) verläuft.

12. Laser nach Anspruch 9, 10 oder 11, dadurch gekennzeichnet, daß die Gasumwälzeinrichtung (56e) Wärmetauschmittel (62e, 64e) in Gasströmungsrichtung vor und/oder hinter der Turbine (60e) aufweist.

13. Laser nach wenigstens einem der Ansprüche 9 bis 12, dadurch gekennzeichnet, daß die Kammer (50e) einen abnehmbaren Deckel (72e) hat, der die Zentralelektrode (72e) bildet.

14. Laser nach wenigstens einem der vorhergehenden Ansprüche, dadurch gekennzeichnet, daß die Teilstrecken (4e) in einer gemeinsamen Ebene verlaufen und daß der Träger (76e, 82e) als zu einer senkrecht zu der Ebene durch das Zentrum (6e) verlaufenden Achse im wesentlichen rotationssymmetrisches Gehäuse (74e) ausgebildet ist, welches aus einer die Komponenten der Anregungsstrecke tragenden Schale (76e) und einem mit einer Umfangshinterschneidung (84e) an dem Schalenrand (86e) anschließenden Gehäusedeckel (82e) besteht.

15. Laser nach Anspruch 14, dadurch gekennzeichnet, daß die Schale (76e) und der Deckel (82e) aus kohlenstoffaserverstärktem Kunststoff bestehen und integral angeformte, insbesondere radial verlaufende Rippen (80e, 88e) haben.

16. Laser nach Anspruch 14 oder 15, dadurch gekennzeichnet, daß die Schale (76e) über gummielastische Elemente (94e) an einem Tragtisch (96e) gehalten ist.

17. Laser nach Anspruch 14, 15 oder 16, dadurch gekennzeichnet, daß die Schale (76e) und/oder der Deckel (82e) zur Bildung von Kühlmittelkanälen doppelwandig ausgebildet ist.

18. Laser nach einem der Ansprüche 14 bis 17, dadurch gekennzeichnet, daß an dem Deckel (82e) ein Ventilator (89e) zentrisch innerhalb des Gehäuses (74e) angeordnet ist.

19. Laser, insbesondere nach einem oder mehreren der vorstehenden Ansprüche, dadurch gekennzeichnet, daß jeder Umlenkspiegel ein am Träger (74e) zu befestigendes Basisteil (100f) und einen mit einer Spiegelfläche (10f) versehenen, relativ zum Basisteil (100f) beweglichen Spiegelträger (114f) aufweist, der mittels einer Federanordnung (120f) gegen das Basisteil (100f) vorgespannt und über drei in einem Dreieck angeordnete längsverstellbare Stützorgane (122f) an dem Basisteil (100f) abgestützt ist, wobei die Stützorgane (122f) an dem Basisteil (100f) oder dem Spiegelträger (114f) gehalten sind und mit ihren freien Enden (124f) in Keilnuten des anderen Teils eingreifen, von denen zwei Nuten (126f) parallel zueinander verlaufen und die dritte (126f) quer zu den parallelen Nuten (126f) verläuft.

20. Laser nach Anspruch 19, dadurch gekennzeichnet, daß die Stützorgane (122f) als in den Spiegel-träger (114f) geschraubte Stellschrauben ausgebil-det sind.

21. Laser nach Anspruch 19 oder 20, dadurch gekennzeichnet, daß zwei der Nuten (126f) zueinander in gerader Linie ausgerichtet hintereinander angeordnet sind und die dritte Nut (126f′) senkrecht zu den anderen beiden Nuten verläuft.

22. Laser nach Anspruch 19, 20 oder 21, dadurch gekennzeichnet, daß die Federanordnung (120f) Zugfedern umfaßt, die einerseits mit dem Basisteil (100f) und andererseits mit dem Spiegelträger (114f) verbunden und insbesonderere nahe den Stützorganen (122f) angeordnet sind.

FIG.1

FIG.3

FIG. 2

FIG.4

FIG.5

FIG.6

EP 0 427 229 A2

EP 0 427 229 A2

FIG. 7

FIG. 8

14